# EUROPEAN PATENT APPLICATION

(11) **EP 2 153 723 A2**
(43) Date of publication of application: **17.02.2010**
(21) Application number: 09380108.2
(22) Date of filing: 25.05.2009
(51) Int. Cl.: A21B 3/04, F24C 15/32

(54) **Oven for bread and pastries with dehumidifying device**

(30) Priority: 06.08.2008 ES 200802410
(71) Applicant: Dobra Industrial, SA, 08339 Vilassar de Dalt, Barcelona (ES)
(72) Inventor: Brasero Sanchez, Domingo , Dobra Ind. SA, 08339 Vilassar de Dalt, Barcelona (ES)
(74) Representative: Gislon, Gabriele

(57) **Abstract**

The oven for bread and pastries with a dehumidifying device comprises a chamber (10) with a laterally open enclosure (25) which houses one or more heating resistances (11) and one or more centrifugal fans (12) controlled in connection with a rotation inverter to circulate heated air inside said chamber (10), and an air outlet (13) for air to exit from inside the enclosure (25) to the outside. The air outlet (13) is associated to an arrangement of deflector elements (24) providing at least one inclined wall sloping downwardly from a position adjacent to the air outlet (13) towards the periphery of said at least one fan (12), determining a funnel configuration which restricts the flow of the air cast by said fan and strongly propels it towards the outlet (13) to capture and extract steam generated in the chamber (10).

## Description

### Technical Field

The present invention generally relates to an oven for bread and pastries with a dehumidifying device, and more particularly to a convection oven for bread and pastries equipped with a device able to perform a quick and effective extraction of steam from inside the same. The oven of the present invention is useful for a) baking and dehumidifying bread or pastry dough, b) finishing baking and dehumidifying partially prebaked and frozen bread or pastry dough, and c) for dehumidifying bread or pastry dough recently baked in another conventional oven.

### Background of the Invention

Ovens for baking bread and pastries are known which comprise a baking chamber inside which heating means and air circulation means arranged to create a convection current of hot air around the pieces of bread or pastries to be baked are arranged. The heating means generally comprise heating resistances and the circulation means include one or two centrifugal fans driven by electric motors. In a typical arrangement, the oven includes two heating resistances in the form of a helical coil arranged one next to the other surrounding the blade spools of two respective centrifugal fans, such that the air axially taken in by the blade spools is radially propelled through the heating resistances. The two resistance and fan units are installed in a side or rear wall of the baking chamber and separated therefrom by a panel which, in cooperation with other walls, forms a flat prismatic enclosure with inlet ports formed in the front panel and opposite the blade spools of the fans and side outlets.

The blade spools of the fans are usually driven by means of respective electric motors connected with a controlled inverter device to invert the rotating direction of the fans approximately every 3 minutes, and the mentioned enclosure defines forced air guiding ducts associated to the centrifugal fans to distribute a substantially symmetrical circulation of the heated air inside the baking chamber and around the pieces of bread or pastries during the entire baking process. The enclosure usually includes an outlet port connected with a vent to facilitate the outlet or exhaust of the steam released by the bread while baking, and other gaseous materials. Said outlet is usually located in an upper area next to one of the blade spools in the same side or rear wall of the chamber in which the heating means and the air circulation means are installed.

Patent application ES-A-2310109 discloses an oven and a method for baking and dehumidifying bread or for dehumidifying bread recently baked in another conventional oven, entitled "Homo y método de cocción y deshumidificación de pan parcialmente precocido o de deshumidificación de pan cocido" (Oven and method for baking and dehumidifying partially baked bread or for dehumidifying baked bread). The oven is of the type described above and comprises a chamber for housing pieces of bread, heating means for heating air contained inside said chamber, and air circulation means to circulate heated air around said pieces of bread inside the chamber. The oven further comprises an extractor driven by an electric motor connected to an air outlet formed in a side, rear or upper wall of the chamber to forcibly extract humid air from inside the chamber. The hot bread obtained is dehumidified and can be immediately packaged in paper bags and dispensed without it losing its crunchy quality. However, the incorporation of the mentioned extractor driven by an electric motor adds complexity and production and maintenance costs to the oven.

An oven is also known which is provided with a bent element in the form of a square located adjacent to an air outlet port, being projected into the enclosure in which the heating and air circulation means are installed to act as a screen for conducting hot air towards the vent. A drawback of this arrangement is that since said screen is placed next to one of the two blade spools, it tends to capture and guide towards the outlet mostly air propelled by the closest fan, leaving the air flow propelled by the farthest fan virtually unaltered, such that the degree of humidity in the convection flow inside the baking chamber is not uniform.

### Disclosure of the Invention

The present invention contributes to solve the aforementioned and other drawbacks by providing an oven for bread and pastries with a dehumidifying device, which comprises a chamber for housing therein pieces of bread or pastries. Installed in a side or rear wall of said chamber is at least one heating resistance associated to at least one centrifugal fan controlled in connection with a rotation inverter to alternately rotate the fan in opposite directions for certain time periods to circulate air heated by said heating resistance around said pieces of bread or pastries inside the chamber. The chamber includes at least one air guiding duct comprising an enclosure in which the at least one heating resistance and fan assembly is installed. This enclosure is delimited by said side or rear wall, a front panel located opposite the side or rear wall at a sufficient distance therefrom so as to not interfere with the heating resistance and fan assembly, and upper and lower walls connecting said front panel to the side or rear wall. The front panel has at least one inlet port opposite the fan through which the air from inside the chamber is axially taken in by a blade spool of the fan, and the enclosure has side outlets through which the air heated by the heating resistance is radially propelled again into the chamber by the blade spool of the fan. The chamber includes at least one air outlet from inside said enclosure to the outside. The mentioned air outlet has an outlet port in said upper wall of the enclosure, and is associated to an arrangement of deflector elements providing at least one inclined wall, sloping downwardly from a position adjacent to said outlet port and towards the periphery of the blade spool of said at least one fan. The mentioned inclined wall determines, together with the upper wall, a funnel configuration which restricts the flow of the air cast by said fan when it rotates in one of the opposite directions and strongly propels it towards the outlet port of the air outlet to capture and extract steam generated in the chamber.

In one embodiment, the oven includes two heating resistance and fan assemblies arranged one next to the other inside the enclosure, and a single outlet port of the air outlet arranged in the upper wall of the enclosure in a position centered with respect to the fans. The front panel has two inlet ports, each one opposite one of the two fans, and the mentioned arrangement of deflector elements comprises two of said inclined walls oriented in opposite directions, located above and equidistant from the blade spools of the two respective fans. The inclined walls have respective mutually adjacent upper ends arranged in a central area of the outlet port between its two side edges, such that an imaginary prolongation of an upper surface of each inclined wall preferably intersects the respective side edge of the outlet port or a surface of a channel of the air outlet located slightly above said side edge of the outlet port. The two inclined walls preferably form with each other an angle of 90 degrees to 135 degrees, although other angles are also contemplated.

Thus, when the two fans rotate in a first direction, part of the air flow propelled by one of them is captured by the corresponding inclined wall of the arrangement of deflector elements and expelled outside through the outlet port of the air outlet, while the rest of the flow propelled by both fans is recirculated again into the chamber through the corresponding side port of the enclosure. When the two fans rotate in a second opposite direction, the inverse occurs. The alternation in the rotating directions of the fans in cooperation with the inclined walls of the arrangement of deflector elements assures a quick and effective extraction of the steam generated in the chamber and uniformity in relation to temperature and degree of humidity in the hot air flow circulating inside the chamber and around the pieces of bread or pastries.

Optionally, the enclosure is divided into two sections by a dividing vertical wall extending from said mutually adjacent upper ends of the inclined walls to the lower wall and from the front panel to the side or rear wall, such that said dividing vertical wall and the two inclined walls form a configuration in the shape of an arrow tip. The two mentioned sections of the enclosure are laterally open on opposite sides, and each of them houses a respective heating resistance and fan assembly and a respective inlet port in the front panel.

In another embodiment, the enclosure includes a single heating resistance and fan assembly and two of said outlet ports of the air outlet are arranged in the upper wall of the enclosure in separated and symmetrical positions with respect to the fan. In this case, the arrangement of deflector elements comprises two of said inclined walls, each one associated to one of the outlet ports, oriented in opposite directions, and located above and equidistant from a middle area of a blade spool of the fan. Each inclined wall has an upper end connected to a side edge of the corresponding outlet port. Thus, when the fan rotates in a first direction, part of the air flow propelled by the same is captured by the corresponding inclined wall of the arrangement of deflector elements and expelled outside through the corresponding outlet port of the air outlet, while the rest of the air flow is recirculated again into the chamber through the corresponding side port of the enclosure. When the fan rotates in a second opposite direction the inverse occurs. The alternation in the rotating directions of the fans in cooperation with the inclined walls of the arrangement of deflector elements assures a quick and effective extraction of the steam generated in the chamber and uniformity in relation to temperature and degree of humidity in the hot air flow circulating inside the chamber and around the pieces of bread or pastries.

The prompt action of extracting the steam determines that since said steam is expelled quickly, it virtually disappears when the oven door is open, mainly non-vaporized hot fluid remaining therein, which benefits both baking in its end stage and the environment surrounding the oven which receives a lower impact of steam. The oven of the present invention has three main applications. First, it has an application as an oven for baking conventional bread or pastry dough with the ability to dehumidify the pieces of bread or pastries while they are baking. Second, it has an application as an oven for finishing the baking of partially pre-baked and frozen bread or pastry dough with the ability to dehumidify the pieces of bread or pastries while they finish baking. Third, it has an application as an oven for dehumidifying pieces of bread or pastries recently baked in another conventional oven.

It is optionally foreseen to include equipment adapted to condense and liquefy the steam contained in the humid air extracted from inside the chamber through the mentioned air outlet or side vent. This equipment comprises, for example, at least one condenser connected to a duct of the air outlet and means for exhausting or storing the water produced by the condensation.

### Brief Description of the Drawings

The foregoing and other features and advantages will be better understood from the following detailed description of exemplary embodiments in reference to the attached drawings, in which:
Figure 1 is a partial perspective view showing an enlarged detail illustrating deflector elements in an oven for bread and pastries with a dehumidifying device according to a first embodiment, with two fans rotating in a first direction;
Figure 1A is a partial perspective view identical to the previous one but with the two fans rotating in a second opposite direction;
Figure 2 is a perspective view of the elements comprised in an enclosure comprised in the oven chamber, wherein a front panel delimiting said enclosure has been removed and an exhaust channel has been separated for greater clarity of the drawing;
Figure 3 is a perspective view of the enclosure showing the centrifugal fans and the heating resistances through a cutaway made in the front panel;
Figure 4 is a perspective view of the oven without its door and showing an outer part of the oven in which drive motors of the fans and a gas extraction vent are located;
Figure 5 is a partial perspective view showing an enlarged detail illustrating deflector elements in an oven for bread and pastries with a dehumidifying device according to a second embodiment;
Figure 6 is a perspective view illustrating equipment associated to a side of the oven for condensing and liquefying the steam extracted from the oven;
Figure 7 is a front partial view illustrating a preferred variant of the first embodiment; and
Figure 8 is a partial perspective view of the variant of Figure 7.

### Detailed Description of Exemplary Embodiments

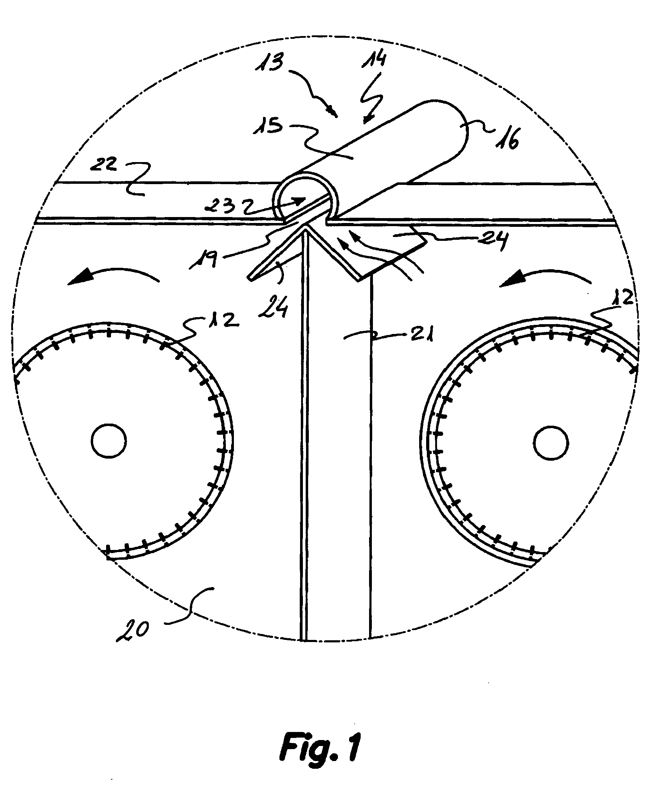

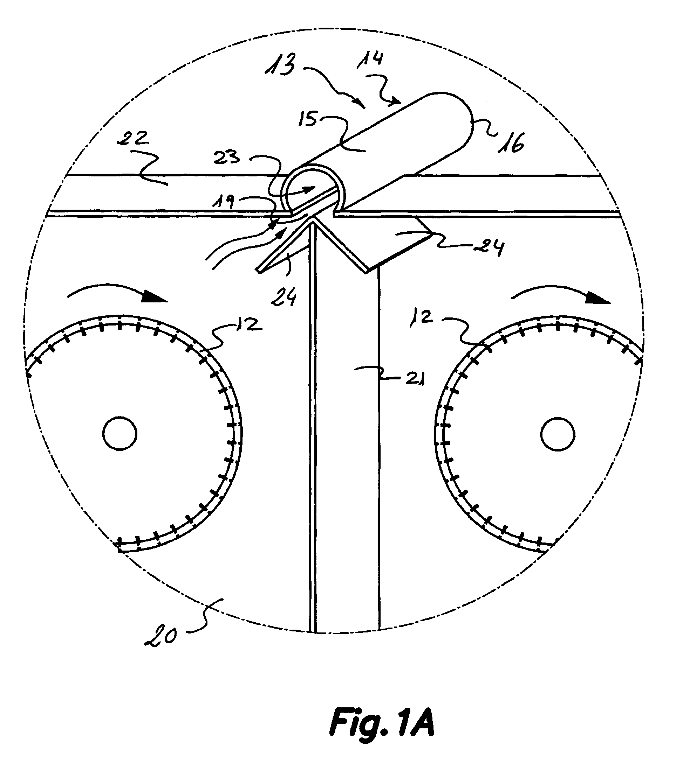

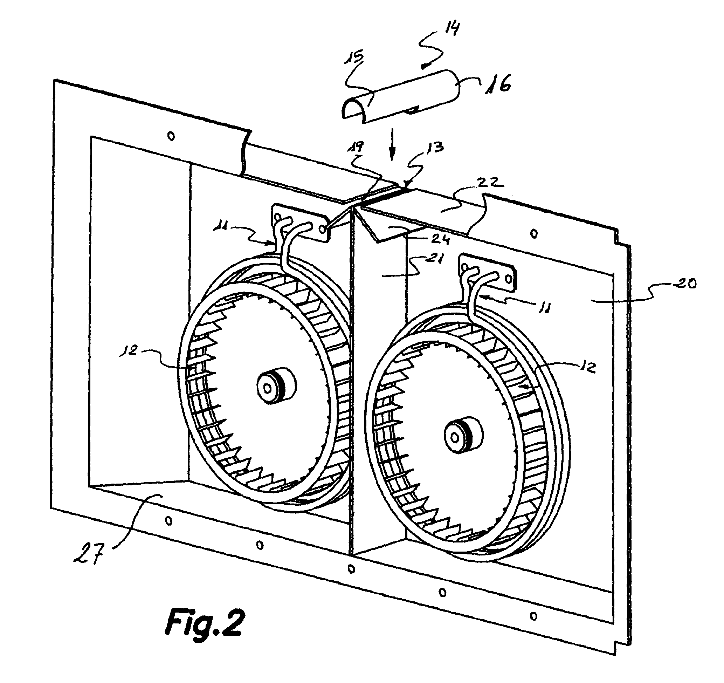

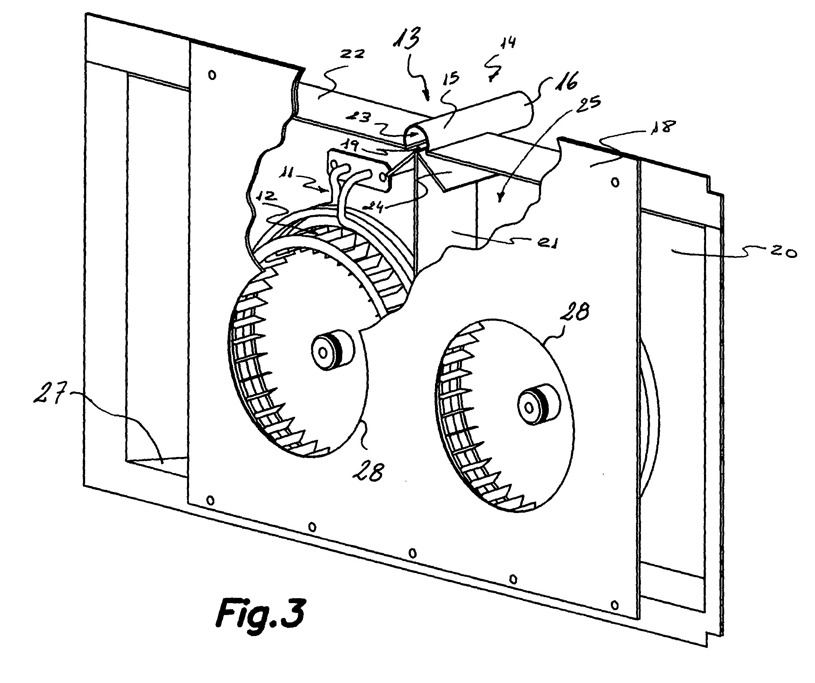

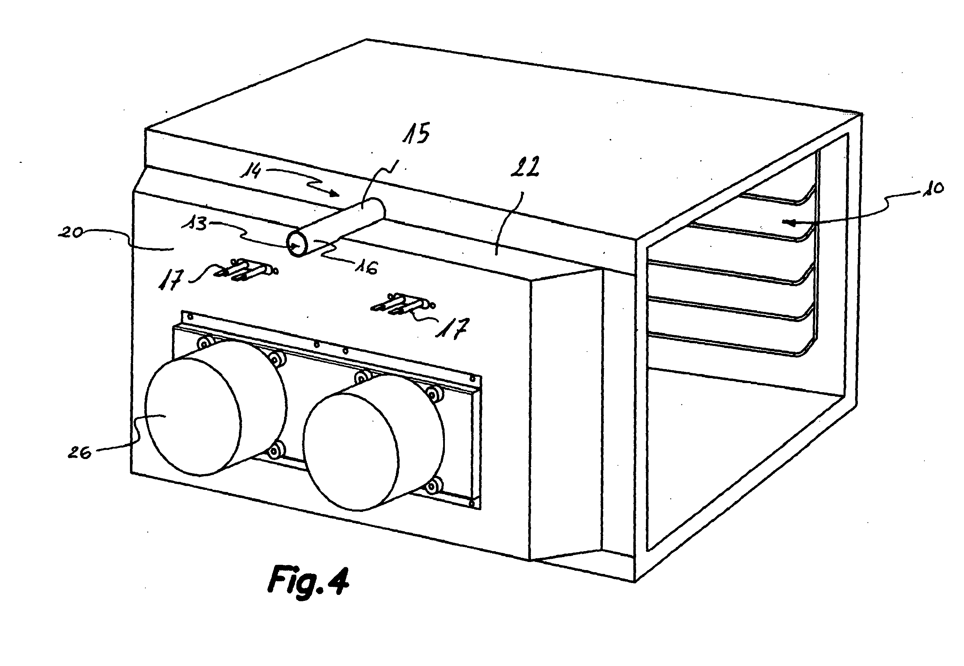

Referring to Figures 1, 1A, 2, 3 and 4, the oven of the present invention is described according to a first embodiment. The oven of this first embodiment comprises a chamber 10 (Fig. 4) for containing therein pieces of bread or pastries or bread or pastry dough, and a substantially prismatic and flat enclosure 25 (Fig. 3), open on its sides and delimited by a side or rear wall 20 of said chamber 10, a front panel 18 (Fig. 3) located opposite said side or rear wall 20, and preferably horizontal upper and lower walls 22, 27 connecting the front panel 18 with the side or rear wall 20. Installed in the side or rear wall 20 and inside said enclosure 25, one next to the other, are two centrifugal fans 12 (Fig. 2) provided with respective blade spools driven by electric motors 26 located outside the chamber 10 (Fig. 4) in connection with a rotation inverter to alternately rotate in first and second opposite directions for certain time periods, for example for approximately three minutes.

The blade spool of each fan 12 is surrounded by a corresponding heating resistance 11 (Figs. 2 and 3) in the form of a helical coil electrically energized by means of connection terminals 17 located outside the chamber 10 (Fig. 4). Thus, an air flow is radially propelled by the blade spool of each fan 12 through its corresponding heating resistance 11 and heated. The two mentioned fans 12 are separated by a dividing vertical wall 21 which divides the enclosure 25 into two substantially equal and symmetrical sections. The front panel 18 has a pair of wide inlet ports 28 (Fig. 3) respectively opposite each of the fans 12, through which the air flows axially taken in by the fans 12 enter the mentioned sections of the enclosure 25, and the sections of the enclosure 25 have side ports in opposite sides, through which the air flows heated by the heating resistances 11 and radially propelled by the fans 12 are recirculated again into the chamber 10. The sections of the enclosure 25 therefore define air guiding ducts.

In the mentioned upper wall 22 of the enclosure 25 there is an outlet port 19 in communication with an air outlet 13 or vent. The mentioned outlet port 19 is associated to an arrangement of deflector elements providing a pair of inclined walls 24 sloping downwardly in opposite directions towards the periphery of the blade spools of the corresponding fans 12. The inclined walls 24 have mutually adjacent upper ends located in a central area of the port 19 and free lower ends located below the upper wall 22 and separated. With this arrangement, the inclined walls 24 together with the upper wall 22 determine funnel configurations restricting part of the air flows radially propelled by the fans and strongly guide them towards said air outlet 13, very quickly and effectively capturing and expelling outside the steam generated in the chamber.

The outlet port 19 of the air outlet 13 is communicated with a horizontal arch-shaped channel 23, which is connected with a hot air outlet vent. In the illustrated embodiment, the outlet port 19 and the mentioned channel 23 extend substantially from the front panel 18 to the side or rear wall 20. The channel 23 is formed by a first trimmed horizontal portion 15 of a cylindrical tubular element 14 arranged above the upper wall 22, such that a concavity defined by said first trimmed horizontal portion 15 is opposite the outlet port 19. The same tubular element 14 comprises a second portion 16 projecting towards the outside of the chamber 10 and performing the functions of said vent. The first trimmed horizontal portion 15 of the tubular element 14 has side edges connected to the upper wall 22 at the side edges of the outlet port 19. The end of the tubular element 14 closest to the chamber 10 is obviously closed (although in the Figures it is shown open for greater clarity of the drawing) such that all the air flow propelled from inside the sections of the enclosure 25 towards the air outlet 13 pass through the outlet port 19. Alternatively, the channel 23 can be constructed in other ways, endeavoring that it preferably has a curved concave inner surface opposite the outlet port 19.

In this first embodiment shown in Figures 1, 1A, 2, 3 and 4, the mutually adjacent upper ends of the inclined walls 24 are connected to an upper end of the dividing vertical wall 21, forming a configuration in the shape of an arrow tip. The dividing vertical wall 21 extends from said mutually adjacent upper ends of the inclined walls 24 to said lower wall 27 and from said front panel 18 to said side or rear wall 20 (Figs. 2 and 3). The inclined walls 24 forming the deflector elements extend from side to side of the dividing vertical wall 21 and are oriented to guide the air flow propelled by the fans 12 towards the outlet port 19, channel 23 and air outlet 13.

In Figure 1, both fans are driven to rotate in a first direction (for example, counterclockwise direction), such that part of the air flow propelled by the blade spool of the fan 12 depicted on the right side of the drawing will be guided towards the outlet port 19 and another part will be recirculated into the chamber 10 through the side port of the corresponding section of the enclosure 25, whereas substantially all the air flow propelled by the blade spool of the fan 12 depicted on the left side of the drawing will be recirculated into the chamber 10 through the side port of the corresponding section of the enclosure 25.

In Figure 1A, the drive of both fans has been reversed to rotate in a second opposite direction (for example, clockwise direction), such that now part of the air flow propelled by the blade spool of the fan 12 depicted on the left side of the drawing will be guided towards the outlet port 19 and another part will be recirculated into the chamber 10 through the side port of the corresponding section of the enclosure 25, whereas substantially all the air flow propelled by the blade spool of the fan 12 depicted on the right side of the drawing will be recirculated into the chamber 10 through the side port of the corresponding section of the enclosure 25.

According to the first embodiment shown in Figures 1 to 4, said two inclined walls 24 form with each other an angle of 90 degrees and are angularly equidistant at 45 degrees from the vertical wall 21 and from the upper wall 22. As explained, the blade spool of the fan 12 casts a portion of air towards the inclined wall 24 forming an angle of 45 degrees with the upper wall 22 in which the outlet port 19 opens, casting it at a speed of at least 10 m/s, making the steam visible inside the chamber 10 disappear in a highly efficient manner, such that when the oven door is opened when the bread has finished baking, hardly any steam remains which therefore does not contaminate the area surrounding the oven.

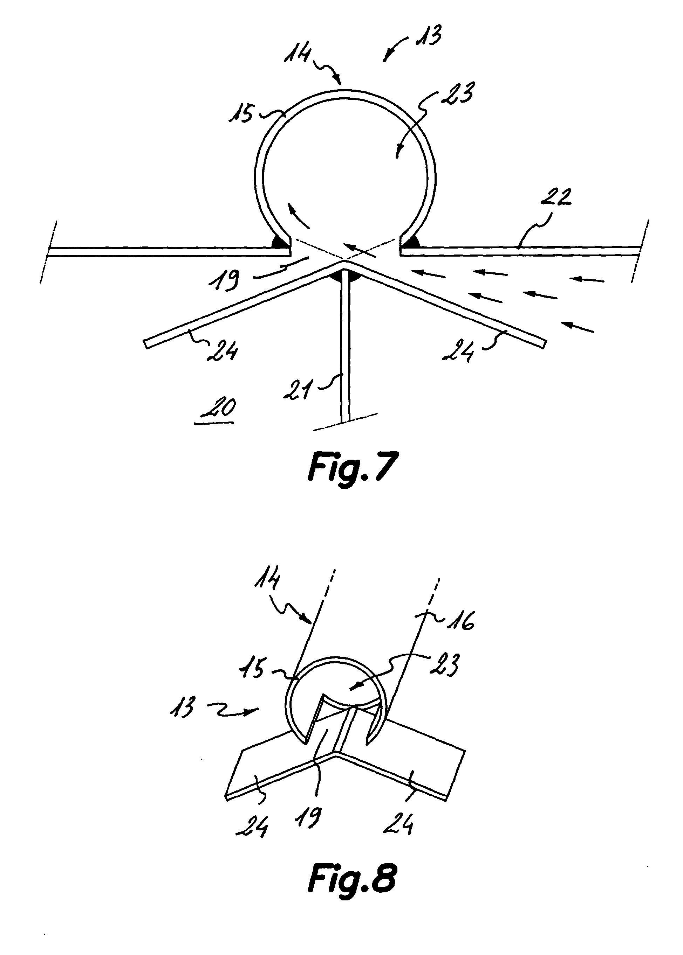

Figures 7 and 8 show a variant of the first embodiment, in which the two inclined walls 24 form with each other an angle of 135 degrees, and each inclined wall 24 forms an angle of 67.5 degrees with the vertical wall 21 and an angle of 22.5 degrees with the upper wall 22. Another relevant feature of this variant of the first embodiment is that the inclined walls 24 are arranged in relation to the outlet port 19 such that an imaginary prolongation of an upper surface of each of the inclined walls 24 converges with an inner surface of the channel 23 in a respective side edge of the outlet port 19, or intersects said inner surface of the channel 23 at a place located slightly above said side edge of the outlet port 19. With this arrangement, the accelerated air flow passing from the enclosure 25 to the air outlet 13 through the outlet port 19 strikes in an approximately tangent direction against a curved inner surface of the channel 23 substantially without losing speed.

In another alternative variant of the first embodiment (not shown), the dividing vertical wall 21 is omitted, such that the air flows propelled by the two fans exit being distributed through both side ports of the enclosure 25 when the fans rotate in any of the two opposite directions except that part of the air flow propelled by at least one of the two fans, which is extracted through the funnel configuration formed by the corresponding inclined wall 24. In the first embodiment and in any of its variants, the angle formed between the two inclined walls can alternatively be any angle preferably comprised between 80 degrees and 140 degrees.

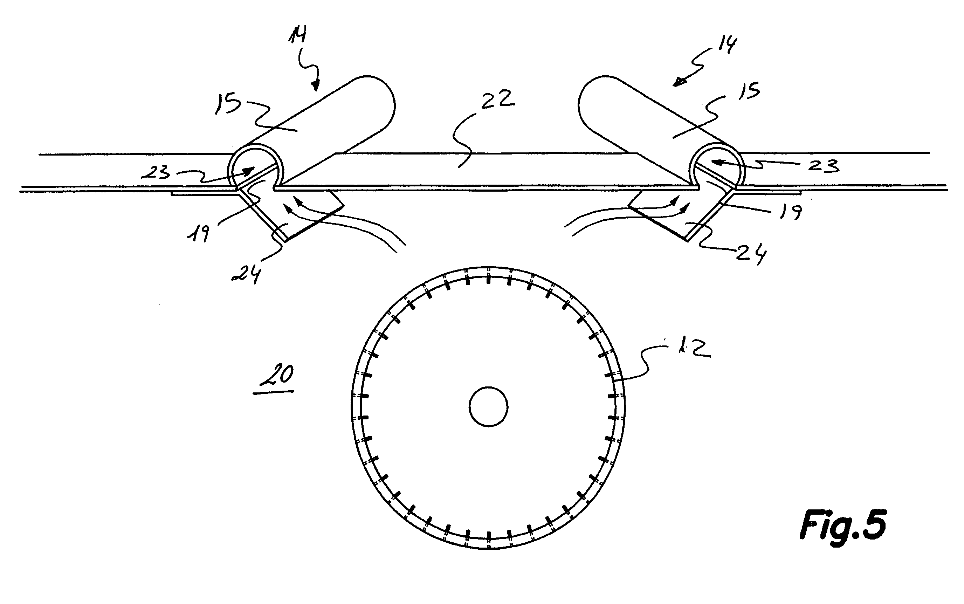

According to a second embodiment shown in Figure 5, the oven has a single fan 12 installed in a side or rear wall 20 of the chamber 10. An enclosure 25 (similar to the one shown in Figure 3) is delimited by said side or rear wall 20, a front panel 18 located opposite the side or rear wall 20, and upper and lower walls 22, 27 connecting the front panel 18 with the side or rear wall 20. Two outlet ports 19 are formed in the upper wall 22, separated and equidistant from the fan 12, and each outlet port 19 is connected with an arch-shaped horizontal channel 23, which can be formed by a first trimmed horizontal portion 15 of a tubular element 14 and arranged with a concavity defined by said first trimmed horizontal portion 15 opposite the outlet port 19 in a manner similar to that described above in relation with the first embodiment. Here, the enclosure 25 does not include the dividing vertical wall 21.

The arrangement of deflector elements comprises two inclined walls 24, each one associated to one of the outlet ports 19. The inclined walls 24 are located above and equidistant from a middle area of a blade spool of the fan 12 and form downward slopes in opposite directions towards the periphery of the blade spool of the fan 12. Each inclined wall 24 has an upper end connected to the upper wall 22 at a side edge of the corresponding outlet port 19 and a free lower end located below the upper wall 22 and more towards the center of the fan 12 than the upper end.

In this second embodiment, the inclined walls can form with the upper wall 22 an angle of 20 degrees to 50 degrees, preferably an angle of 45 degrees and more preferably an angle of 22.5 degrees. In a preferred arrangement, an upper surface of each of the inclined walls 24 converges with an inner surface of the channel 23 in a side edge of the respective outlet port 19, or in a place located slightly above said side edge of the outlet port 19. With this arrangement, the accelerated air flows passing from the enclosure 25 to the air outlet 13 through the outlet ports 19 strike in an approximately tangent direction against the curved inner surfaces of the respective channels 23 substantially without losing speed. The two tubular elements 14 preferably converge beyond the channels 23 in a common single vent (not shown).

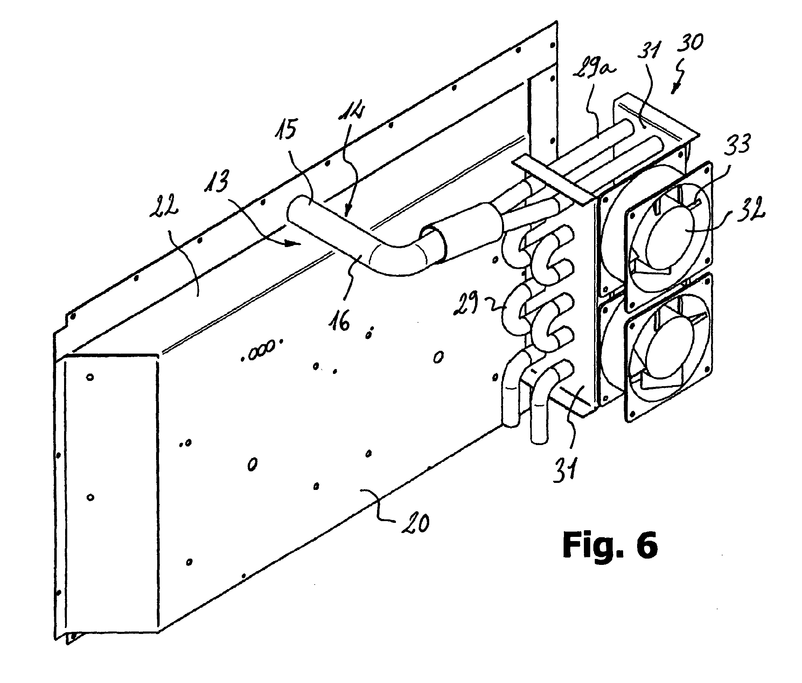

As shown in Figure 6, for the purpose of suitably eliminating the extracted steam and minimally affecting the area in which the oven is installed, equipment for condensing and liquefying the steam contained in the humid air extracted from inside the chamber has been provided. This equipment comprises, for example, a condenser 30 with one or more pipe coils 29 connected to the outlet of the second projecting portion 16 of the tubular element 14 of the air outlet 13. The mentioned one or more pipe coils 29 form several loops traversing two diffuser plates 31 such that a plurality of portions 29a of the pipe coils 29 extend from one of said diffuser plates 31 to the other. One or more fans 33 driven by respective electric motors 32 are arranged to propel an ambient air current between the two diffuser plates and around the portions 29a of the pipe coils 29 to cool the air extracted from the chamber circulating through the pipe coils 29 and thus condense the steam contained in the air extracted from the chamber 10. The water produced by the condensation can be drained into a sink by means of a tubing (not shown) arranged for such purpose or it can alternatively be temporarily stored in a tank (not shown) to be emptied when appropriate.

The condenser described in relation to Figure 6, or any other condenser device which may occur to a person skilled in the art, in combination with any of the embodiments of the present invention and its variants described in relation to Figures 1 to 5, 7 and 8 is within the scope of the present invention.

A person skilled in the art will be able to made modifications and variations based on the embodiments shown and described without departing from the scope of the present invention as it is defined in the attached claims.

## Claims

1. An oven for bread and pastries with a dehumidifying device, of the type comprising:
- a chamber (10) for housing therein pieces of bread or pastries;
- at least one heating resistance (11) associated to at least one centrifugal fan (12) controlled in connection with a rotation inverter to alternately rotate the fan in opposite directions for certain time periods to circulate heated air through said heating resistance (11) and around said pieces of bread or pastries inside said chamber (10);
- at least one air guiding duct comprising an enclosure (25) delimited by a front panel (18) with at least one inlet port (18a) opposite said fan (12), upper and lower walls (22, 27) connecting said front panel (18) to a side or rear wall (20) of the chamber (10) in which the heating resistance (11) and the fan (12) are installed, and side outlets (18b); and
- at least one air outlet (13) for air to exit from inside said enclosure (25) to the outside;
**characterized in that** said air outlet (13) has an outlet port (19) in said upper wall (22) and is associated to an arrangement of deflector elements providing at least one inclined wall (24) sloping downwardly from a position adjacent to said outlet port (19) and towards the periphery of said fan (12), which is at least one in number, determining together with the upper wall (22) a funnel configuration which restricts the flow of the air cast by said fan (12) when it rotates in at least one of said directions and strongly propels it towards the outlet port (19) of the outlet (13) to capture and extract steam generated in the chamber (10).

2. The oven according to claim 1, **characterized in that** said outlet port (19) of the air outlet (13) is communicated with a channel (23) connected with a vent of said hot air outlet.

3. The oven according to claim 2, **characterized in that** an upper surface of said inclined wall (24), or an imaginary prolongation thereof, converges with an inner surface of said channel (23) in a respective side edge of the outlet port (19) or in a place located slightly above said side edge of the outlet port (19).

4. The oven according to claim 3, **characterized in that** said inner surface of the channel (23) is curved.

5. The oven according to claim 4, **characterized in that** the channel (23) is formed by a first trimmed horizontal portion (15) of a tubular element (14) arranged above the upper wall (22), with a concavity defined by said first trimmed horizontal portion (15) opposite the outlet port (19).

6. The oven according to claim 5, **characterized in that** said tubular element (14) comprises a second portion (16) projecting towards the outside of the chamber (10) acting as said vent.

7. The oven according to claim 2, 3 or 4, **characterized in that** the outlet port (19) and the channel (23) extend substantially from the front panel (18) to the side or rear wall (20).

8. The oven according to any of claims 1 to 7, **characterized in that** two heating resistance (11) and fan (12) assemblies are arranged, one next to the other, in the enclosure (25), and a single outlet port (19) is arranged in the upper wall (22) in a position centered with respect to the fans (12), and **in that** said arrangement of deflector elements comprises two of said inclined walls (24) oriented in opposite directions, located above and equidistant from blade spools of the respective fans (12), the inclined walls (24) having respective mutually adjacent upper ends located centered with respect to the outlet port (19).

9. The oven according to claim 8, **characterized in that** said two inclined walls (24) form with each other an angle of 80 degrees to 140 degrees.

10. The oven according to claim 9, **characterized in that** said two inclined walls (24) form with each other an angle of 135 degrees.

11. The oven according to claim 9, **characterized in that** said two inclined walls (24) form with each other an angle of 90 degrees.

12. The oven according to claim 9, 10 or 11, **characterized in that** a dividing vertical wall (21) extends from said mutually adjacent upper ends of the inclined walls (24) to said lower wall (27) and from said front panel (18) to said side or rear wall (20) dividing said enclosure (25) into two laterally open sections, each of which houses a respective heating resistance (11) and fan (12) assembly, said dividing vertical wall (21) and the two inclined walls (24) forming a configuration in the shape of an arrow tip.

13. The oven according to any of claims 1 to 7, **characterized in that** a single heating resistance (11) and fan (12) assembly is arranged in the enclosure (25) and two of said outlet ports (19) of the air outlet (13) are arranged in the upper wall (22) in separated and symmetrical positions with respect to the fan (12), and **in that** said arrangement of deflector elements comprises two of said inclined walls (24), each one associated to one of the outlet ports (19) and oriented in opposite directions, located above and equidistant from a middle area of a blade spool of the fan (12), each inclined wall (24) having an upper end connected to a side edge of the corresponding outlet port (19).

14. The oven according to claim 13, **characterized in that** each inclined wall (24) forms with the upper wall (22) an angle of 20 degrees to 50 degrees.

15. The oven according to any of the previous claims, **characterized in that** it includes a condenser (30) associated with the air outlet (13) to condense and liquefy the steam contained in the humid air extracted from inside the chamber (1).
